# EUROPEAN PATENT APPLICATION

(11) **EP 2 637 327 A1**
(43) Date of publication of application: **11.09.2013**
(21) Application number: 12158856.0
(22) Date of filing: 09.03.2012
(51) Int. Cl.: H04H 60/04, H05B 37/02

(54) **Audio mixing console with lighting control and method of mixing by means of a mixing console**

(71) Applicant: Harman International Industries Ltd., Potters Bar, Hertfordshire EN6 3JN (GB)
(72) Inventor: Ayres, Richard, Stevenage, Hertfordshire SG2 8SJ (GB); Rowe, Matthew, Welwyn Garden City, Hertfordshire AL7 4RZ (GB)
(74) Representative: Bertsch, Florian Oliver

(57) **Abstract**

Various embodiments relate to a mixing console (1) comprising an audio processing module (2) and a light processing module (3). The mixing console (1) further comprises a plurality of audio interfaces (5a) and a lighting interface (5b). Furthermore, a plurality of actuation elements (20 - 28) is comprised. The plurality of audio interfaces (5a) is respectively configured for inputting or outputting of audio signals (50a, 50b). The audio processing module (2) is configured to control audio signal properties by processing of the plurality of audio signals (50a, 50b). The lighting interface (5b) is configured to output a lighting control signal (51). The light processing module (3) is configured to generate the lighting control signal to control lighting properties by means of the lighting control signal (51). Each of the plurality of actuation elements (20-28) is selectively coupled to the audio processing module (2) and/or the light processing module (3) for controlling of the audio signal properties and/or the lighting properties.

## Description

### Technical Field

Various embodiments relate to a mixing console having a housing and a method of mixing by means of a mixing console. In particular, various embodiments relate to a mixing console having an audio processing module and a light processing module arranged within the housing.

### Background

In the art, audio mixing consoles comprising an audio processing module for processing and mixing of audio channels are known. For example, in applications such as live performance or studio recording, a plurality of audio channels may be present. Each of the audio channels comprises at least one audio signal. The audio mixing consoles are configured for processing, i.e., providing effects such as echo or fading, and mixing of the various audio signals. After processing, the processed audio signals can be output.

On the other hand, in the art lighting consoles or light mixing consoles are known. Such consoles allow for controlling of a lighting system for example by setting such parameters as color, brightness, shape, gobo, or position of the different lights being part of the lighting system.

In some applications, combined and synchronized control of lighting properties and audio signal properties is desired. For example, in on-stage performances the synchronized control of a plurality of audio channels together with the stage lighting can be desired. In the art, solutions are known which allow for coupling of separate lighting and audio mixing consoles via external and/or third-party interfaces. For example, a control signal, such as a signal employing the musical instruments digital interface (MIDI) standard, may be fed from the audio mixing console through a third-party interface to a lighting console in order to provide a synchronized control of audio and lighting.

However, such techniques for providing synchronized control of lighting properties and audio signal properties suffer from drawbacks. For example, the overall number of system components, as well as the combined size and weight of the involved equipment may be large. This makes such an assembly difficult to handle and move. Moreover, during operation, a user must be capable of handling the two devices at the same time in order to extensively control all properties of sound and light. This may be difficult, as typically the type and number of actuation elements as found on lighting versus audio consoles are considerably different. One-man operation may therefore be limited and it may be necessary to have two operators at the same time. This all may increase costs in production and operation.

### Summary

Therefore, a need exists to provide techniques for controlling audio signal properties as well as lighting properties, the techniques allowing for a more flexible workflow as well as reduced hardware requirements.

This need is met by the features of the independent claims. The dependent claims define embodiments.

According to an aspect, a mixing console having a housing is provided. The mixing console comprises a plurality of audio interfaces arranged on the housing and being configured for inputting or outputting audio signals. The mixing console further comprises an audio processing module arranged within the housing and being configured to control audio signal properties by processing of the plurality of audio signals. The mixing console further comprises a lighting interface arranged on the housing and being configured to output a lighting control signal to a lighting system. The mixing console further comprises a light processing module arranged within the housing and being configured to generate the lighting control signal to control lighting properties of the lighting system. The mixing console further comprises a plurality of actuation elements arranged on the housing, wherein each of the plurality of actuation elements is selectively coupled to the audio processing module and/or the light processing module for controlling of the audio signal properties and/or the lighting properties.

For example, the audio signal properties may be selected from the group consisting of: echo, fade, volume, mixing. For example, it may be possible to mix two audio signals using the audio processing module to obtain a single output audio signal. Different audio mixing techniques are known to the skilled person.

The lighting control signal may be a standardized control signal such as the digital multiplex (DMX) control signal. Such a lighting control signal may allow individual control of lighting properties of a plurality of lights of the lighting system. The lighting properties may be selected from the group consisting of: intensity or brightness, position, color, gobo, beam shape. For example, the plurality of lights of the lighting system may be coupled to a signal bus used for transmission of the lighting control signal. The signal bus may be connected to the lighting interface.

By providing a mixing console which comprises the audio processing module and the light processing module for the controlling of the audio signal properties as well as of the lighting properties within one housing, a number of effects may be obtained. For example, it may be possible to have fewer separate items to store, transport, flight-case, maintain, and manage if compared to the case where a separate audio mixing console and a separate lighting console is required. At the same time, during operation, less space and fewer power connections may be required; also the overall power consumption may be reduced. This may result in reduced costs of operation.

Furthermore, the mixing console may comprise a synchronization interface. The synchronization interface may be coupled to the light processing module and the audio processing module and may be configured to synchronize controlling of the audio signal properties and the lighting properties. By providing the synchronization interface, automated and synchronized control of the lighting properties and the audio signal properties may be obtained while, at the same time, operation by a single user may be possible. For example, by operating a single one of the plurality of actuation elements of the mixing console, combined and synchronized control of lighting and audio signal properties may be obtained. The complexity of system operation may be reduced if compared to a case of separate audio and lighting mixing consoles. However, it may be possible to individually address the audio signal or the lighting properties by accordingly configured actuation elements which address either audio or lighting.

Furthermore, the synchronization interface may be configured to enable synchronized control of the lighting properties based on the audio signal properties. In order to further decrease the complexity of the system, it may be possible to base the control of the lighting properties on properties of one or a plurality of the audio signals input or output through the audio interfaces. Such properties could be the volume or the frequency spectrum of the audio signal.

If compared to a case where separate audio and lighting mixing consoles are present, with a microphone being attached to the lighting console for control of the lighting based on sound, increased flexibility in the control of the lighting may be obtained. For example, in the latter case, it may be required to play back the audio signal at an audible level in order to control the lighting properties based on the audio signal properties as received via the microphone and fed into the lighting console. However, in the performance space it may not be possible or practical to do so, for example very late or early in the day or during certain rehearsals where playing sound would be a distraction to the rehearsal. Differently, in the present case, according to an embodiment, the outputting of the processed audio signals via audio interfaces may be disabled. Therefore, using the synchronization interface, control of lighting properties based on the audio signal properties may be possible while, at the same time, no audio signal is output via the audio interfaces. Therefore, an increased flexibility in the control of lighting properties may be achieved.

The mixing console may further comprise a control user interface being configured to allow user-defined assignment of control of the lighting properties and/ or control of the audio signal properties to at least one of the actuation elements of the plurality of actuation elements. By flexibly assigning audio-related and / or light-related functions to the actuation elements, simple one-man operation with an improved workflow during operation may be achieved. For example, it may be possible to assign functions related solely to the control of the audio signal properties or solely to the control of the lighting properties to one of the actuation elements. It may also be possible to assign combined control of the audio signal and the lighting properties to a single actuation element. Therefore, a single user or operator may flexibly control the lighting and audio signal properties according to his needs.

In particular, the actuation elements may be selected from the group consisting of: fader, rotary knob, motorized fader, mouse, trackball, touchscreen, 360° continuous encoder, universal serial bus (USB) device, button. Depending on the particular task to be controlled by the particular actuation element, the various types of actuation elements may have advantages and disadvantages. For example, it may be possible to assign the function related to a change of the volume of an audio signal and the function related to a change in intensity or brightness of the lighting system to a single actuation element in the form of a fader or motorized fader. At the same time, it may be possible to assign color of a light of the lighting system and echo of one of the audio signals to one of the 360° continuous encoders. Such examples are merely illustrative and are not to be construed as being limiting. In particular, using a control user interface, it may be possible to assign any combination of functions, be it related to the control of audio signal properties or the lighting properties, to each of the actuation elements. This may allow for increased flexibility of the control of the lighting and the audio signal properties during performance.

At the same time, the mixing console may comprise storage means which are configured for storing combined audio and lighting control scripts. The audio processing module and the light processing module may be configured for automatic and synchronized control of the audio signal properties and the lighting properties, respectively, based on the combined audio and lighting control scripts. In other words, the audio and lighting control scripts or audio and lighting cues may be sequences for synchronized control in one system, thereby eliminating the need for a separate third-party system. They may allow for automated and synchronized and combined control of the audio signal and the lighting properties. For example, it may be possible to provide appropriate software to facilitate the managing of those presets and scenes stored in the control scripts. Particular firmware may be stored in the storage means which may be required to generate the lighting control script. Thereby, also when automated control of the audio signal and the lighting properties is desired by means of the control scripts, a high degree of flexibility and simple operation may be obtained.

The audio processing module and the light processing module may share at least one of the following: a digital signal processor, a central processing unit, a non-volatile memory, a random access memory. It may be possible to integrate the audio processing module and the light processing module by sharing hardware to a large degree. In such a case, for example a shared central processing unit and a shared digital signal processor may reduce the overall hardware requirements of the mixing console, in particular if compared to a case of separated audio mixing and lighting consoles. Therefore, different components of the mixing console may be implemented as software executed on said units. In particular, for example the synchronization interface may be implemented as software executed on shared hardware.

Also, the mixing console may comprise a wireless interface being configured to enable remote control of the audio processing module and/or the light processing module and/or at least one of the actuation elements via a remote unit. By such means, for example it may be possible to allow for remote control via the external unit, such as a laptop, portable tablet computer, or similar wireless enabled devices within the same application executed on the remote unit. This may increase the flexibility in the control of the mixing console.

In particular, the audio interfaces may be selected from the group consisting of: digital audio interfaces, analog audio interfaces. For example, the digital audio interfaces may be according to the standard AES or EBU. The lighting interface may be selected from the group consisting of: DMX outputs, MIDI interface.

To this respect, the audio interfaces and the lighting interface may be configured to be selectively enabled. This may allow for individual control of either the lighting properties or the audio signal properties using the mixing console.

According to a further aspect, a method of mixing by means of a mixing console is provided. The method comprises receiving a plurality of audio signals via a plurality of audio interfaces and processing the plurality of audio signals by means of an audio processing module based on a state of at least one of a plurality of actuation elements. The method further comprises outputting the plurality of processed audio signals by means of the plurality of audio interfaces. The method further comprises generating a lighting control signal by means of a light processing module based on a state of at least one of the plurality of actuation elements and controlling lighting properties of a lighting system by means of the lighting control signal being output via a lighting interface to the lighting system.

For such a method according to the presently discussed aspect, effects may be obtained which are comparable to the effects obtained for a mixing console according to a further aspect of the present invention as discussed above.

It is to be understood that the features mentioned above and the features yet to be explained below can be used not only in the respective combinations indicated, but also in other combinations or in isolation without departing from the scope of the present invention. Features of the above-mentioned aspects and embodiments may be combined with each other in other embodiments.

The foregoing and additional features and effects of the invention will become apparent from the following detailed description when read in conjunction with the accompanying drawings, in which like reference numerals refer to like elements.

### Brief Description of the Drawings

In these drawings:
FIG. 1 is a schematic representation of a mixing console according to an embodiment of the present invention;
FIG. 2 is a schematic representation of a mixing console according to a further embodiment of the present invention;
FIG. 3 schematically illustrates different actuation elements of a mixing console according to an embodiment of the present invention; and
FIG. 4 is a flowchart illustrating a method of mixing by means of a mixing console according to an aspect of the present invention.

### Detailed Description of Embodiments

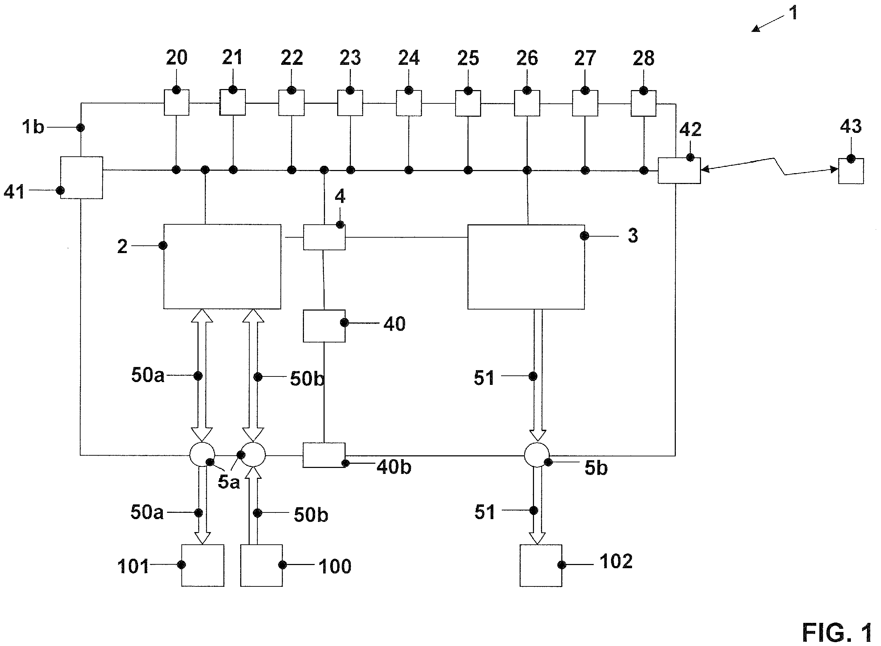

FIG. 1 schematically illustrates a mixing console 1 according to an embodiment of the present invention. The mixing console 1 comprises a housing 1b on which a plurality of actuation elements 20-28 is arranged. The actuation elements 20-28 are coupled to an audio processing module 2 and a light processing module 3. The actuation elements 20-28 can be used by a user in order to control operation of the modules 2, 3.

The audio processing module 2 is configured to control properties of audio signals 50a, 50b. The audio signals 50a, 50b are input and output via audio interfaces 5a. In particular, the audio interfaces 5a are configured to selectively input (for the case of audio signal 50b) or output (for the case of audio signal 50a). For example, the audio signals 50a, 50b can be retrieved from an audio source 100, e.g., a microphone or a playback of pre-recorded audio tracks, and output to loudspeakers or a recording media 101. Processing of the properties of the audio signals 50a, 50b may relate to properties such as: volume, fading, echo, and mixing. Respective techniques of processing the audio signals 50a, 50b by means of the audio processing module 2 are known to the skilled person such that there is no need to discuss further details in this context.

The light processing module 3 is configured to generate a lighting control signal 51 which is used to control lighting properties of a lighting system 102. To this respect, the lighting control signal 51 is output via a lighting interface 5b to the lighting system 102. The lighting system 102 can comprise a plurality of individual lights which, for example, can be connected via a data bus system. The light processing module 3 can be configured in order to control the properties of all lights of the lighting control system 102 individually by means of the lighting control signal 51. A typical standard known to the skilled person is the digital multiplex standards (DMX). There is no need to discuss further details of these techniques in this context.

As can be seen from FIG. 1, the audio processing module 2 is coupled with the light processing module 3 via a synchronization interface 4. The latter is configured to synchronize the controlling of the audio signal properties and the lighting properties within the modules 2, 3. For example, the synchronization interface 4 may provide a clock signal or like means to the modules 2,3 in order to provide the synchronized control. For example, this can occur via the connection between the actuation elements 20-28 with the synchronization interface 4. A user can manually control the respective audio signal and lighting properties via operating one of the actuation elements 20-28. The synchronization interface 4 then forwards this manual control in a synchronized manner to the modules 2, 3.

Another possibility is automated control of the audio signal and light properties based on combined audio and lighting control scripts which may comprise a sequence of commands, possibly with a time stamp, addressing the different properties which are controllable by the modules 2, 3. A user may predefine the audio and lighting control scripts and store them in a storage means 40 until needed. For example, a user may externally create the audio and lighting control scripts and provide them to the storage means 40 via an interface 40b.

Moreover, the mixing console 1 of FIG. 1 comprises a control user interface 41. The control user interface 41 is configured in order to allow user-defined assignment of the control of the lighting properties and/or the control of the audio signal properties to at least one of the actuation elements 20-28. For example, the actuation element 20, e.g. a fader, can be configured via the control user interface 41 to adjust the volume of the input audio signal 50b. At the same time, the actuation element 21, e.g. a rotary knob, can be configured via the control user interface 41 in order to change the direction of lights of the lighting system 102 via control of the operation of the light processing module 3. At the same time, the actuation element 22, e.g. a motorized fader, can be configured via the control user interface 41 in order to change the echo of the output audio signal 50a and, at the same time, change the color of the lights of the lighting system 102 via control of the operation of the light processing module 3. As can be seen, any combination of user-defined functions with respect to the audio processing module 2 and the light processing module 3 may be assigned to the actuation elements 20-28 via the control user interface 41. This allows flexible and synchronized control of audio signals and lighting properties. These are merely illustrative examples and must not be construed as being limiting.

Furthermore, the mixing console 1 of FIG. 1 comprises a wireless interface 42 which may establish a bi-directional wireless transmission to a remote unit 43, such as a laptop, tablet computer, or other portable communication device. An application being executed on the remote unit 43 may be used in order to configure the functioning of the mixing console 1, in particular control the assignment of the actuation elements 20-28 to the controlling of the audio signal and/or lighting properties in a manner comparable as set forth above with respect to the control user interface 41. Moreover, via the wireless interface 42, it may be possible to enable remote control of the audio processing module 2 and/or the light processing module 3 directly. In such a fashion, using one and the same application being executed on the remote unit 43, it is possible to control the audio signal and the lighting properties in a flexible and synchronized manner. In other words, the remote unit 43 in connection with the wireless interface 42 may function as another actuation element by controlling the operation of the processing modules 2, 3.

The drawings are to be regarded as schematic representations. In particular, the various elements are represented such that their function and general purpose becomes apparent to a person skilled in the art. Any connection or coupling between functional blocks, devices, components or other physical or functional units shown in FIG. 1 and the following Figures or described hereinafter may also be implemented by an indirect connection or coupling. A coupling between components may also be established over a wireless connection. Functional blocks may be implemented in a hardware, firmware, software, or a combination thereof. For example, in the embodiment of FIG. 1, the audio processing module 2 and the light processing module 3 are shown as separate units. However, it is possible that the modules 2, 3 are implemented as software code being executed on a single processing unit or are implemented as functions on a single board. Moreover, a separate synchronization unit 4 is shown in FIG. 1. It should be understood that it is not necessary to provide a separate synchronization unit as in the embodiment of FIG. 1. Rather, it may be possible to achieve functionalities of the synchronization unit 4 by means of appropriate system layout as well as functional software codes being executed on a central and possibly shared processing unit.

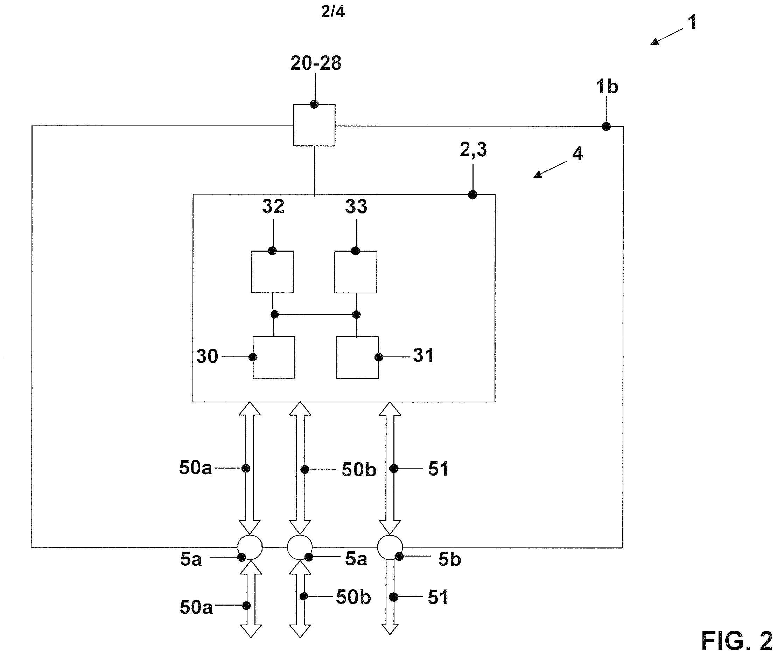

An example of integration of different units into a single device is shown in the embodiment of the mixing console 1 depicted in FIG. 2. The audio processing module 2 and the light processing module 3 are integrated as parts of an on-chip system formed by a digital signal processor 30, a central processing unit 31, non-volatile memory 32, as well as random access memory 33. For example, the operation of the modules 2, 3 may be implemented as a combination of firmware and software within the system formed by the units 30-33. In such a case, the modules 2, 3 share hardware which allows to inherently provide synchronization which, in the example of FIG. 1, was provided by means of the separate synchronization interface 4. Moreover, the hardware requirements of the mixing console 1 can be reduced, thereby reducing costs and maintenance requirements.

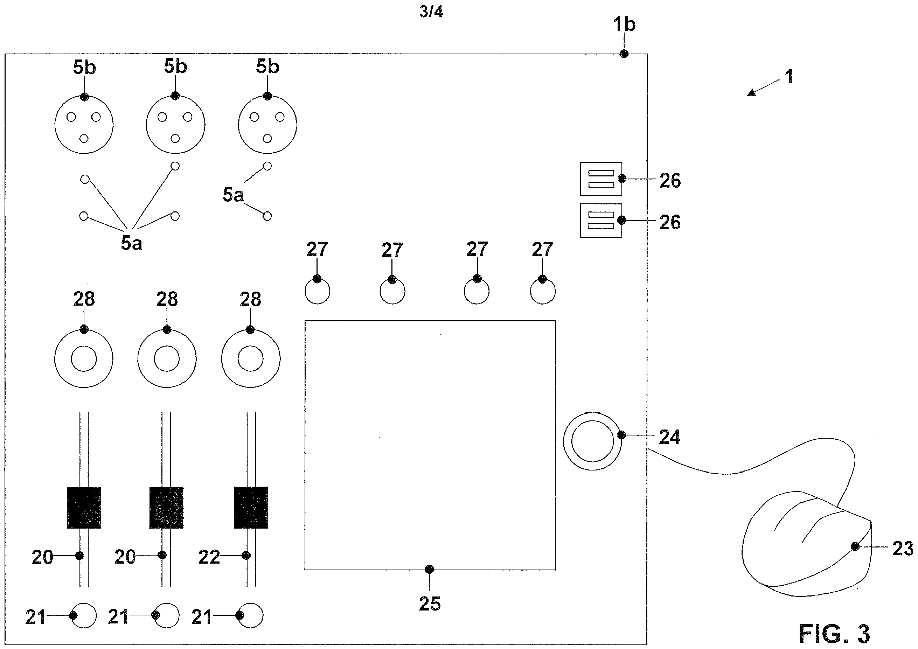

FIG. 3 schematically illustrates different types of the actuation elements 20-28 arranged on the housing 1b of the mixing console 1. Shown are faders 20, rotary knobs 21, motorized faders 22, a mouse 23, a trackball 24, a touchscreen 25 (for example a LCD screen), connection means 26 for a USB device, buttons 27, and 360° continuous encoders 28. Further depicted in FIG. 3 are audio interfaces 5a and the lighting interfaces 5b. For example, the lighting interfaces 5b can be five pin male XLR or three pin male AXR, providing electrical interface to a DMX bus. Such examples are merely illustrative and are not to be construed as being limiting. For example, other wireless technologies or interfaces may be employed as the interface 5b to connect with the lighting system 102 such as Ethernet, Bluetooth, or wireless Ethernet.

It should be understood that via the control user interface 41, different functions with respect to the audio signal and/or light processing can be assigned to the different actuation elements 20-28. The control user interface 41 itself can in one embodiment be implemented in the form of one of the actuation elements 20-28, for example by means of the touchscreen 25. By depicting respectively adapted graphical menus, for example it can be possible to allow user-defined assignment of control of the lighting properties and/or the control of the audio signal properties to the faders 20, 22 via the touchscreen 25. It can also be possible to load and execute predefined audio and lighting control scripts using menus depicted on the touchscreen 25. However, such a task may also be performed by using a wireless connection via the wireless interface 42 using the remote unit 43.

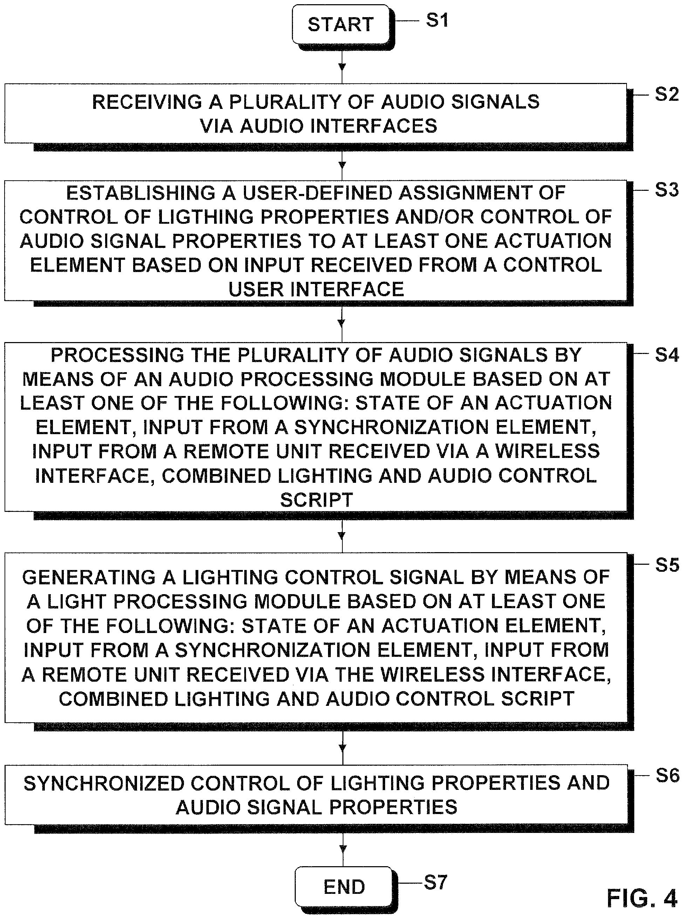

FIG. 4 is a flowchart of a method of mixing using a mixing console such as the mixing console 1 discussed with respect to the FIGs. 1 - 3. The method starts with step S1.

In step S2, a plurality of audio signals 50a, 50b is received via the audio interfaces 5a. For example, the audio signals 50a, 50b are received from a audio signal source, such as microphones or means for playback of previously recorded audio signals. In general, the audio interfaces 5a can input and / or output the audio signals 50a, 50b.

Next, in step S3, a user-defined assignment of control of lighting properties and/or control of audio signal properties to at least one of the actuation elements 20-28 is established based on the input received from the control user interface 41. For example, one of the actuation elements 20-28 may be assigned with control of lighting properties or control of audio signal properties or combined control of lighting and audio signal properties. The user-defined assignment allows for flexibility in the manual control of lighting and audio signal properties by a user of the mixing console 1.

Next, in step S4, the plurality of audio signals 50a, 50b, as received in step S2, is processed. The processing occurs by means of the audio processing module 2 and is based on at least one of the following: state of one or more of the actuation elements 20 - 28 (particular as previously assigned in step S3), input from the synchronization element 4, input from the remote unit 43 received via the wireless interface 42, and a combined lighting and audio control script. For example, the synchronization element 4 can ensure that the synchronized control of the lighting and audio signal properties is achieved. However, it should be understood that the synchronization element 4 can be implemented in one embodiment as software being part of a processing unit or being part of one of the audio processing module 2 and/or the light processing module 3.

A lighting and audio control script or lighting and audio cue may be used to predefine certain scenes or procedures used during operation of the mixing console 1. This may be advantageous in cases where a previously planned on-stage performance is being executed. Then, for example, a combined automatic control via the control script and an manual control via the actuation elements 20 - 28 can be possible.

Respectively, in step S5 a lighting control signal is generated by means of the light processing module 3 based on at least one of the following: state of at least one of the actuation elements 20 - 28, input from the synchronization element 4, input from the remote unit 43 received via the wireless interface 42, combined lighting and audio control script, e.g., received from the storage means 40. It should be understood that the manner in which the state of at least one of the actuation elements 20 - 28 influences the processing of the audio signals 50a, 50b and lighting control in steps S4 and S5, respectively, is determined in step S3 where a user-defined assignment of the respective controls to the different actuation elements occurs.

In step S6, a synchronized control of lighting properties and audio signal properties is obtained based on the processing and generating in the steps S4 and S5.

The method ends in step S7.

Although the invention has been shown and described with respect to certain embodiments, equivalents and modifications will occur to others skilled in the art upon reading and understanding of the specification. The present invention includes all such equivalents and modifications and is limited only by the scope of the appended claims.

## Claims

1. A mixing console (1) having a housing (1b), the mixing console (1) comprising:
- a plurality of audio interfaces (5a) arranged on the housing (1b) and being respectively configured for inputting or outputting of audio signals (50a, 50b),
- an audio processing module (2) arranged within the housing (1b) and being configured to control audio signal properties by processing of the plurality of audio signals (50a, 50b),
- a lighting interface (5b) arranged on the housing (1b) and being configured to output a lighting control signal (51) to a lighting system (102),
- a light processing module (3) arranged within the housing (1b) and being configured to generate the lighting control signal (51) to control lighting properties of the lighting system (102),
- a plurality of actuation elements (20-28) arranged on the housing (1b), wherein each of the plurality of actuation elements (20-28) is selectively coupled to the audio processing module (2) and / or the light processing module (3) for controlling of the audio signal properties and / or the lighting properties.

2. The mixing console (1) of claim 1, further comprising a synchronization interface (4), the synchronization interface (4) being coupled to the light processing module (3) and the audio processing module (2) and being configured to synchronize controlling of the audio signal properties and the lighting properties.

3. The mixing console (1) of claim 2, wherein the synchronization interface (4) is configured to enable synchronized control of the lighting properties based on the audio signal properties.

4. The mixing console (1) of any of the preceding claims, further comprising:
- a control user interface (41), the control user interface (41) being configured to allow user-defined assignment of control of the lighting properties and / or control of the audio signal properties to at least one of the actuation elements (20-28) of the plurality of actuation elements (20-28).

5. The mixing console (1) of any of the preceding claims, wherein the actuation elements (20-28) are selected from the group consisting of: fader (20), rotary knob (21), motorized fader (22), mouse (23), trackball (24), touchscreen (25), 360 degree continuous encoder (28), universal serial bus device (26), button (27).

6. The mixing console (1) of any of the preceding claims, further comprising:
- storage means (40) which are configured for storing combined audio and lighting control scripts,
wherein the audio processing module (2) and the light processing module (3) are configured for automatic and synchronized control of the audio signal properties and the lighting properties, respectively, based on the combined audio and lighting control scripts.

7. The mixing console (1) of any of the preceding claims, wherein the audio processing module (2) and the light processing module (3) share at least one of the following: a digital signal processor (30), a central processing unit (31), a non-volatile memory (32), a random access memory (33).

8. The mixing console (1) of any of the preceding claims, further comprising:
- a wireless interface (42), the wireless interface (42) being configured to enable remote control of the audio processing module (2) and / or the light processing module (3) and / or at least one of the actuation elements (20-28) via a remote unite (43).

9. The mixing console (1) of any of the preceding claims, wherein the audio interfaces are selected from the group consisting of: digital audio interfaces (5a), analogue audio interfaces (5a);
and wherein the lighting interface is selected from the group consisting of: Digital Multiplex outputs, MIDI Musical Instrument Digital interface.

10. The mixing console (1) of any of the preceding claims, wherein audio interfaces (5a) and the lighting interface (5b) are configured to be selectively enabled.

11. A method of mixing by means of a mixing console (1), the method comprising:
- receiving a plurality of audio signals (50a, 50b) via a plurality of audio interfaces (5a),
- processing the plurality of audio signals (50a, 50b) by means of an audio processing module (2) based on a state of at least one of a plurality of actuation elements (20-28),
- outputting the plurality of processed audio signals (50a, 50b) by means of the plurality of audio interfaces (5a),
- generating a lighting control signal (51) by means of a light processing module (3) based on a state of at least one of the plurality of actuation elements (20-28),
- controlling lighting properties of a lighting system (102) by means of the lighting control signal (51) being output via a lighting interface (5b) to the lighting system (102).

12. The method of claim 11, wherein the generating of the lighting control signal (51) and the control of the lighting system (102) is based on at least one of the received audio signals (50a, 50b) and / or the outputted processed audio signals (50a, 50b).

13. The method of any of claims 11 or 12, wherein the processing of the plurality of audio signals (50a, 50b) and the generating of the lighting control signal (51) is based on combined audio and lighting control scripts retrieved from a storage means (40).

14. The method of any of claims 11-13, wherein the processing of the plurality of audio signals (50a, 50b) and the generating of the lighting control signal (51) is synchronously performed by means of a synchronization interface (4).

15. The method of any of claims 11-14, further comprising:
- establishing a user-defined assignment of the control of lighting properties and / or the control of audio signal properties to at least one of the actuation elements (20-28) of the plurality of actuation elements (20-28) based on a user input from a control user interface (41).
